# EUROPÄISCHE PATENTSCHRIFT

(11) **EP 3 695 152 B1**
(45) Veröffentlichungstag und Bekanntmachung des Hinweises auf die Patenterteilung: **31.08.2022**
(21) Anmeldenummer: 18785560.6
(22) Anmeldetag: 05.10.2018
(51) Int. Cl.: F16L 11/11, F16L 11/15

(54) **WELLSCHLAUCH**
CORRUGATED HOSE
TUYAU ONDULÉ

(30) Priorität: 13.10.2017 DE 102017123889
(43) Veröffentlichungstag der Anmeldung: 19.08.2020
(73) Patentinhaber: Delfingen FR-Anteuil S.A., 25340 Anteuil (FR)
(72) Erfinder: CHU, Van Ngoc, 85586 Poing (DE)
(74) Vertreter: Horn Kleimann Waitzhofer Patentanwälte PartG mbB
(86) Internationale Anmeldenummer: PCT/EP2018/077107
(87) Internationale Veröffentlichungsnummer: WO 2019/072706

(56) Entgegenhaltungen:
- CN-A- 105 863 906
- DE-A1- 19 641 806
- DE-A1- 19 930 151
- US-A1- 2012 255 329

## Beschreibung

Die vorliegende Erfindung betrifft einen Wellschlauch.

Wellschläuche oder Wellrohre können sowohl im Automobilbau als auch in jedem anderen Industriebereich als Schutzrohre für Kabel, wie beispielsweise elektrische Leitungen, eingesetzt werden. Ein derartiger Wellschlauch weist eine Wellung mit sich in einer Längsrichtung des Wellschlauchs abwechselnden Wellentälern und Wellenbergen auf. Zum Herstellen eines Kabelbaums werden die Kabel in den Wellschlauch eingezogen oder eingeschoben.

Die Wellentäler sind mit Hilfe von Wellenflanken mit den Wellenbergen verbunden. Beim Biegen eines derartigen Wellschlauchs bilden Übergangsbereiche zwischen den Wellenflanken und den Wellentälern beziehungsweise den Wellenbergen Biegebereiche, die sich elastisch verformen. Beim Biegen des Wellschlauchs werden bei der Biegung außen liegende Bereiche des Wellschlauchs gedehnt und innen liegende Bereiche desselben gestaucht. Bei einer starken Biegung kann der Wellschlauch dadurch beginnen abzuflachen. Hierdurch kann der Wellschlauch knicken oder beschädigt werden.

Die US 2012/0255329 A1 beschreibt einen Wellschlauch, der abwechselnd angeordnete Wellenberge und Wellentäler aufweist. Wellenflanken verbinden die Wellenberge mit den Wellentälern. Die Wellenflanken weisen eine gestufte Geometrie auf.

Die CN 105 863 906 A zeigt einen Blasebalg für ein Abgassystem eines Kraftfahrzeugs.

Die DE 196 41 806 A1 beschreibt einen ring- oder wendelgewellten Schlauch oder Balg mit konzentrisch um die Schlauch- oder Balgachse und in Axialrichtung hintereinander angeordneten Wellen mit Flanken der Wellen verbindenden Wellenbergen und -tälern. Dabei sind zumindest ein Teil der Flanken zumindest über einen Teilbereich ihrer Fläche mit in Radial- und/oder Umfangsrichtung verlaufenden Profilierungen versehen.

Die DE 199 30 151 A1 zeigt ein Wellrohr mit Wellungen, die sich radial zur axialen Längserstreckungsrichtung des Wellrohres erstrecken, wobei die Wellungen, Wellenberge und Wellentäler sowie Flanken dazwischen aufweisen, wobei wenigstens eine Flanke einer Wellung einen Hinterschneidungsbereich aufweist, wobei der Flankenwinkel größer als 90° ist.

Vor diesem Hintergrund besteht eine Aufgabe der vorliegenden Erfindung darin, einen verbesserten Wellschlauch zur Verfügung zu stellen.

Demgemäß wird ein Wellschlauch mit einer Vielzahl an Wellentälern und Wellenbergen, die in einer Längsrichtung des Wellschlauchs abwechselnd angeordnet sind, und einer Vielzahl an Wellenflanken, welche die Wellentäler und die Wellenberge miteinander verbinden, vorgeschlagen. Dabei umfasst jede Wellenflanke einen ersten Wellenflankenabschnitt, einen zweiten Wellenflankenabschnitt und einen zwischen dem ersten Wellenflankenabschnitt und dem zweiten Wellenflankenabschnitt angeordneten Biegeabschnitt, wobei sich der Biegeabschnitt bei einem Biegen des Wellschlauchs derart elastisch verformt, dass der erste Wellenflankenabschnitt relativ zu dem zweiten Wellenflankenabschnitt verschwenkt. Dabei bildet der Biegeabschnitt ein Scharnier, um das der erste Wellenflankenabschnitt relativ zu dem zweiten Wellenflankenabschnitt oder umgekehrt verschwenken kann, wobei jedes Wellental mit Hilfe eines ersten Biegebereichs und eines von dem ersten Biegebereich in der Längsrichtung beabstandet positionierten zweiten Biegebereichs in zwei beidseits des Wellentals angeordnete Wellenflanken übergeht.

Durch das Vorsehen des Biegeabschnitts kann ein zusätzlicher Biegebereich in der jeweiligen Wellenflanke verwirklich werden. Das heißt, beim Biegen des Wellschlauchs fungieren nicht nur Übergangsbereiche zwischen den Wellentälern beziehungsweise den Wellenbergen und den Wellenflanken als Biegebereiche, sondern auch die zusätzlichen Biegeabschnitte der Wellenflanken. Hierdurch kann die Flexibilität des Wellschlauchs signifikant erhöht werden. Ferner kann eine Wellenhöhe einer Wellung des Wellschlauchs bei gleicher Flexibilität reduziert werden. Hierdurch ergibt sich eine Materialeinsparung bei der Herstellung des Wellschlauchs. Bei gleicher Wellenhöhe kann somit im Vergleich zu Wellschläuchen ohne derartige Biegeabschnitte eine höhere Flexibilität und Formstabilität erzielt werden.

Insbesondere ist der Wellschlauch rotationssymmetrisch zu einer Symmetrie- oder Mittelachse ausgebildet. Die Längsrichtung ist parallel zu der Symmetrieachse angeordnet oder stimmt mit dieser überein. Die Wellentäler, die Wellenberge und die Wellenflanken bilden eine sich in der Längsrichtung erstreckende Wellung des Wellschlauchs. Der Wellschlauch ist vorzugweise aus einem Kunststoffmaterial gefertigt. Beispielsweise kann der Wellschlauch aus Polyamid (PA), Polyethylen (PE), Polypropylen (PP), Polytetrafluorethylen (PTFE), Polyvinylchlorid (PVC) oder einem anderen geeigneten Kunststoffmaterial gefertigt sen. Bevorzugt ist der Wellschlauch aus einem teilkristallinen Thermoplast gefertigt.

Bei einem Biegen des Wellschlauchs fungieren bevorzugt nicht nur Übergangsbereiche oder Verrundungen zwischen den Wellentälern und den Wellenflanken beziehungsweise zwischen den Wellenbergen und den Wellenflanken als Biegebereiche oder Biegestellen, sondern auch die zusätzlichen Biegeabschnitte der Wellenflanken. Dabei sind bevorzugt jedem Wellental zwei Biegebereiche oder Biegestellen zugeordnet, die beidseits des Wellentals in eine entsprechende Wellenflanke übergehen. Diese Biegebereiche oder Biegestellen sind in der Längsrichtung voneinander beabstandet positioniert. Jedem Wellental sind somit ein erster Biegebereich und ein zweiter Biegebereich zugeordnet. Die beiden Biegebereiche jedes Wellentals sind bevorzugt als Verrundungen, insbesondere als eine erste Verrundung und als eine zweite Verrundung, ausgebildet oder können als solche bezeichnet werden. Die beiden Verrundungen verbinden das jeweilige Wellental beidseits mit den Wellenflanken. Die Wellentäler können glatt sein oder eine Vorwölbung aufweisen. Bevorzugt weist jedes Wellental eine zylinderförmige Geometrie auf.

Dementsprechend sind bevorzugt auch jedem Wellenberg zwei Biegebereiche oder Biegestellen zugeordnet, die beidseits des Wellenbergs in eine entsprechende Wellenflanke übergehen. Diese Biegebereiche oder Biegestellen sind in der Längsrichtung voneinander beabstandet positioniert. Jedem Wellenberg sind somit ein erster Biegebereich und ein zweiter Biegebereich zugeordnet. Die beiden Biegebereiche jedes Wellenbergs sind insbesondere als Verrundungen, insbesondere als eine erste Verrundung und als eine zweite Verrundung, ausgebildet oder können als solche bezeichnet werden. Die beiden Verrundungen verbinden den Wellenberg beidseits mit den Wellenflanken. Die Wellenberge können glatt sein. Bevorzugt weist jeder Wellenberg eine zylinderförmige Geometrie auf.

Erfindungsgemäß umfasst der Wellschlauch eine Vielzahl an Wellentälern und Wellenbergen, die in einer Längsrichtung des Wellschlauchs abwechselnd angeordnet sind, und eine Vielzahl an Wellenflanken, welche die Wellentäler und die Wellenberge miteinander verbinden, wobei jedes Wellental mit Hilfe eines ersten Biegebereichs oder einer ersten Biegestelle, insbesondere einer ersten Verrundung, und eines von dem ersten Biegebereich in der Längsrichtung beabstandet positionierten zweiten Biegebereich oder einer zweiten Biegestelle, insbesondere einer zweiten Verrundung, in zwei beidseits des Wellentals angeordnete Wellenflanken, übergehen. Dabei umfasst jede Wellenflanke einen ersten Wellenflankenabschnitt, einen zweiten Wellenflankenabschnitt und einen zwischen dem ersten Wellenflankenabschnitt und dem zweiten Wellenflankenabschnitt angeordneten Biegeabschnitt, wobei sich der Biegeabschnitt bei einem Biegen des Wellschlauchs derart elastisch verformt, dass der erste Wellenflankenabschnitt relativ zu dem zweiten Wellenflankenabschnitt verschwenkt. Entsprechend kann auch jeder Wellenberg mit Hilfe zweier Biegebereiche oder Biegestellen, bevorzugt mit Hilfe eines ersten Biegebereichs oder einer ersten Biegestelle, insbesondere einer ersten Verrundung, und eines von dem ersten Biegebereich in der Längsrichtung beabstandet positionierten zweiten Biegebereich oder einer zweiten Biegestelle, insbesondere einer zweiten Verrundung, in die Wellenflanken, insbesondere in zwei beidseits des Wellenbergs angeordnete Wellenflanken, übergehen.

Bei einer weiteren besonders bevorzugten Weiterbildung des Wellschlauchs umfasst dieser eine Vielzahl an Wellentälern und Wellenbergen, die in einer Längsrichtung des Wellschlauchs abwechselnd angeordnet sind, und eine Vielzahl an Wellenflanken, welche die Wellentäler und die Wellenberge miteinander verbinden, wobei jede Wellenflanke einen ersten Wellenflankenabschnitt, einen zweiten Wellenflankenabschnitt und einen zwischen dem ersten Wellenflankenabschnitt und dem zweiten Wellenflankenabschnitt angeordneten Biegeabschnitt umfasst, wobei sich der Biegeabschnitt bei einem Biegen des Wellschlauchs derart elastisch verformt, dass der erste Wellenflankenabschnitt relativ zu dem zweiten Wellenflankenabschnitt verschwenkt, wobei jedes Wellental mit Hilfe einer ersten Verrundung und mit Hilfe einer in der Längsrichtung von der ersten Verrundung beabstandet angeordneten zweiten Verrundung in zwei, insbesondere benachbarte, Wellenflanken übergeht, und wobei die Verrundungen bei dem Biegen des Wellschlauchs als Biegebereiche fungieren.

Die Biegeabschnitte können auch als Biegestellen bezeichnet werden. Jeder Biegeabschnitt bildet insbesondere eine Schnittstelle zwischen dem jeweiligen ersten Wellenflankenabschnitt und dem entsprechenden zweiten Wellenflankenabschnitt. Dabei kann der Biegeabschnitt Teil des ersten Wellenflankenabschnitts und/oder des zweiten Wellenflankenabschnitts sein. Der Biegeabschnitt bildet ein Scharnier, bevorzugt ein einachsiges Scharnier, um das der erste Wellenflankenabschnitt relativ zu dem zweiten Wellenflankenabschnitt oder umgekehrt verschwenken kann. Unter einem "einachsigen Scharnier" ist insbesondere ein Scharnier zu verstehen, dass nur eine Biegeachse oder Scharnierachse aufweist. Jedem Wellental beziehungsweise jedem Wellenberg sind zwei Wellenflanken zugeordnet, die schräg zu der Längsrichtung geneigt sind. Insbesondere sind jedem Wellental beziehungsweise jedem Wellenberg zwei gegensinnig geneigte Wellenflanken zugeordnet. Der erste Wellenflankenabschnitt läuft insbesondere ringförmig um die Symmetrieachse um. Ebenso läuft der zweite Wellenflankenabschnitt bevorzugt ringförmig um die Symmetrieachse um. Die Wellentäler, die Wellenberge, der erste Wellenflankenabschnitt, der zweite Wellenflankenabschnitt und der Biegeabschnitt sind einstückig, insbesondere materialeinstückig, ausgebildet. Bevorzugt wird der Wellschlauch mit Hilfe eines Extrusionsverfahrens hergestellt. Die Wellung kann mit Hilfe eines sogenannten Corrugators an den Wellschlauch angeformt werden. Die Wellentäler können wellig ausgebildet sein und so als wellige Wellentäler bezeichnet werden. Gemäß einer Ausführungsform sind der erste Wellenflankenabschnitt und der zweite Wellenflankenabschnitt in der Längsrichtung zueinander versetzt angeordnet.

Das heißt, zwischen dem ersten Wellenflankenabschnitt und dem zweiten Wellenflankenabschnitt ist in der Längsrichtung betrachtet ein Abstand vorgesehen. Dieser Abstand wird von dem Biegeabschnitt überbrückt. Hierdurch kann erreicht werden, dass bei einem Biegen des Wellschlauchs gezielt nur der Biegeabschnitt und nicht die Wellenflankenabschnitte verformt werden.

Gemäß einer weiteren Ausführungsform ist der erste Wellenflankenabschnitt in einem ersten Neigungswinkel relativ zu der Längsrichtung geneigt, und der zweite Wellenflankenabschnitt ist in einem zweiten Neigungswinkel relativ zu der Längsrichtung geneigt.

Insbesondere ist der erste Wellenflankenabschnitt in dem ersten Neigungswinkel relativ zu der Symmetrieachse und der zweite Wellenflankenabschnitt ist in dem zweiten Neigungswinkel relativ zu der Symmetrieachse geneigt. Der erste Neigungswinkel und der zweite Neigungswinkel sind ungleich 90°. Das heißt, der erste Wellenflankenabschnitt und der zweite Wellenflankenabschnitt sind nicht senkrecht zu der Längsrichtung beziehungsweise zu der Symmetrieachse positioniert. Der erste Neigungswinkel und/oder der zweite Neigungswinkel können beispielsweise etwa 85° betragen.

Gemäß einer weiteren Ausführungsform sind der erste Neigungswinkel und der zweite Neigungswinkel unterschiedlich groß oder gleich groß.

Für den Fall, dass der erste Neigungswinkel und der zweite Neigungswinkel gleich groß sind, sind der erste Wellenflankenabschnitt und der zweite Wellenflankenabschnitt parallel zueinander positioniert. Insbesondere kann zwischen dem ersten Wellenflankenabschnitt und dem zweiten Wellenflankenabschnitt ein dritter Neigungswinkel vorgesehen sein. Der dritte Neigungswinkel beträgt beispielsweise 155° bis 157°, weiter bevorzugt 160° bis 170°, weiter bevorzugt 165°.

Gemäß einer weiteren Ausführungsform geht der erste Wellenflankenabschnitt einem Innenraum des Wellschlauchs zugewandt mit Hilfe einer bogenförmig gekrümmten ersten Verrundung in den zweiten Wellenflankenabschnitt über.

Die erste Verrundung umfasst insbesondere einen Bogen, bevorzugt einen Kreisbogen. Die erste Verrundung kann beispielsweise mehrere Bögen aufweisen, so dass der Biegeabschnitt im Querschnitt S-förmig geschwungen ist und den ersten Wellenflankenabschnitt mit dem zweiten Wellenflankenabschnitt verbindet.

Gemäß einer weiteren Ausführungsform ist die erste Verrundung tangential zu dem ersten Wellenflankenabschnitt und/oder dem zweiten Wellenflankenabschnitt angeordnet.

Wie zuvor erwähnt, kann die erste Verrundung so den ersten Wellenflankenabschnitt und den zweiten Wellenflankenabschnitt mit Hilfe des S-förmig gekrümmten Biegeabschnitts miteinander verbinden.

Gemäß einer weiteren Ausführungsform geht der erste Wellenflankenabschnitt dem Innenraum abgewandt mit Hilfe einer bogenförmig gekrümmten zweiten Verrundung in den zweiten Wellenflankenabschnitt über.

Die zweite Verrundung ist insbesondere einer Umgebung des Wellschlauchs zugewandt.

Gemäß einer weiteren Ausführungsform ist die zweite Verrundung tangential zu dem ersten Wellenflankenabschnitt und/oder dem zweiten Wellenflankenabschnitt angeordnet.

Die zweite Verrundung kann insbesondere mehrere Bögen, bevorzugt Kreisbögen, aufweisen, wodurch der Biegeabschnitt, wie zuvor erwähnt, im Querschnitt eine S-förmige Geometrie aufweisen kann. Die zweite Verrundung umfasst bevorzugt zwei Bögen, insbesondere zwei Kreisbögen, von denen je einer tangential zu dem entsprechenden Wellenflankenabschnitt positioniert ist. Die beiden Bögen wiederum sind tangential zueinander positioniert.

Gemäß einer weiteren Ausführungsform weist der Biegeabschnitt die erste Verrundung und die zweite Verrundung auf.

Der Biegeabschnitt weist so die zuvor erwähnte geschwungene Geometrie auf.

Gemäß einer weiteren Ausführungsform geht der erste Wellenflankenabschnitt dem Innenraum abgewandt mit Hilfe einer Geraden in den zweiten Wellenflankenabschnitt über.

Die Gerade ist parallel zu der Längsrichtung beziehungsweise zu der Symmetrieachse positioniert. Bei dieser Ausführungsform des Wellschlauchs weist dieser dem Innenraum abgewandt beziehungsweise der Umgebung zugewandt die Gerade und dem Innenraum zugewandt die erste Verrundung auf.

Gemäß einer weiteren Ausführungsform weist der Biegeabschnitt die erste Verrundung und die Gerade auf.

Die Gerade kann auch schräg zu der Längsrichtung beziehungsweise schräg zu der Symmetrieachse angeordnet sein.

Gemäß einer weiteren Ausführungsform ist der erste Wellenflankenabschnitt innerhalb des zweiten Wellenflankenabschnitts angeordnet.

Das heißt, der zweite Wellenflankenabschnitt läuft außenseitig ringförmig um den ersten Wellenflankenabschnitt um. Der erste Wellenflankenabschnitt und der zweite Wellenflankenabschnitt erstrecken sich in der Radialrichtung des Wellschlauchs von einem jeweiligen Wellental in der Richtung eines jeweiligen Wellenbergs.

Gemäß einer weiteren Ausführungsform weist jedes Wellental eine einem Innenraum des Wellschlauchs abgewandte Vorwölbung auf.

Das heißt, die Vorwölbung ist der Umgebung des Wellschlauchs zugewandt. Die Vorwölbung weist im Querschnitt eine konkave Geometrie auf. Die Vorwölbung läuft ringförmig um die Symmetrieachse um. Die Vorwölbung dient als Materialansammlung und sorgt dafür, dass eine dem Innenraum zugewandte Innenfläche des jeweiligen Wellentals in der Längsrichtung betrachtet glatt oder eben ist. Hierdurch kann ein Scheuern von innen liegenden Kabeln an der Innenfläche bei Vibrationen verhindert werden, da die Innenfläche keine Unebenheiten oder Einsenkungen aufweist, an denen die Kabel beschädigt werden könnten. Die Vorwölbung ist optional.

Gemäß einer weiteren Ausführungsform ist die Vorwölbung bogenförmig gekrümmt.

Insbesondere ist die Vorwölbung kreisbogenförmig gekrümmt. Die Vorwölbung geht bevorzugt mit Hilfe zweier beidseits der Vorwölbung angeordneter Verrundungen in die jeweilige Wellenflanke, insbesondere in den jeweiligen ersten Wellenflankenabschnitt, über. Hierdurch weisen die Wellentäler jeweils eine wellige Geometrie auf und können daher auch als wellige Wellentäler bezeichnet werden. Die Verrundungen sind bogenförmig, insbesondere kreisbogenförmig, gekrümmt. Bei einem Biegen des Wellschlauchs können diese Verrundungen, insbesondere zusätzlich zu den Biegeabschnitten der Wellenflanken, als Biegebereiche fungieren, so dass sich nur die Verrundungen die jeweils einen Übergang zwischen dem Wellental und den Wellenflanken bilden, verformen und die Vorwölbung selbst unverformt bleibt. Die Vorwölbung kann somit das jeweilige Wellental versteifen, so dass keine unerwünschte Verformung des Wellentals im Bereich der Vorwölbung erfolgt, sondern nur die Verrundungen verformt werden.

Gemäß einer weiteren Ausführungsform ist jedes Wellental dem Innenraum zugewandt glatt.

Das heißt, jedes Wellental weist dem Innenraum zugewandt eine kreiszylinderförmige Innenfläche auf, die in der Längsrichtung betrachtet glatt oder eben ist. Alternativ kann die Innenfläche, wie die Vorwölbung, bogenförmig, insbesondere kreisbogenförmig, gekrümmt sein. Die Innenfläche ist dann als innenseitig um das jeweilige Wellental umlaufende Vertiefung oder Nut ausgebildet. Hierdurch kann in den Wellentälern eine konstante Wanddicke erzielt werden.

Weitere mögliche Implementierungen des Wellschlauchs umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Wellschlauchs hinzufügen.

Weitere vorteilhafte Ausgestaltungen und Aspekte des Wellschlauchs sind Gegenstand der Unteransprüche sowie der im Folgenden beschriebenen Ausführungsbeispiele des Wellschlauchs. Im Weiteren wird der Wellschlauch anhand von bevorzugten Ausführungsformen unter Bezugnahme auf die beigelegten Figuren näher erläutert.
Fig. 1 zeigt eine schematische Seitenansicht einer Ausführungsform eines Wellschlauchs;
Fig. 2 zeigt eine schematische Schnittansicht des Wellschlauchs gemäß der Schnittlinie II-II der Fig. 1;
Fig. 3 zeigt die Detailansicht III gemäß Fig. 2;
Fig. 4 zeigt eine schematische Seitenansicht einer weiteren Ausführungsform eines Wellschlauchs;
Fig. 5 zeigt eine schematische Schnittansicht des Wellschlauchs gemäß der Schnittlinie V-V der Fig. 4;
Fig. 6 zeigt die Detailansicht VI gemäß Fig. 5;
Fig. 7 zeigt eine schematische Seitenansicht einer weiteren Ausführungsform eines Wellschlauchs;
Fig. 8 zeigt eine schematische Schnittansicht des Wellschlauchs gemäß der Schnittlinie IIX-IIX der Fig. 7; und
Fig. 9 zeigt die Detailansicht IX gemäß Fig. 8.

In den Figuren sind gleiche oder funktionsgleiche Elemente mit denselben Bezugszeichen versehen worden, sofern nichts anderes angegeben ist.

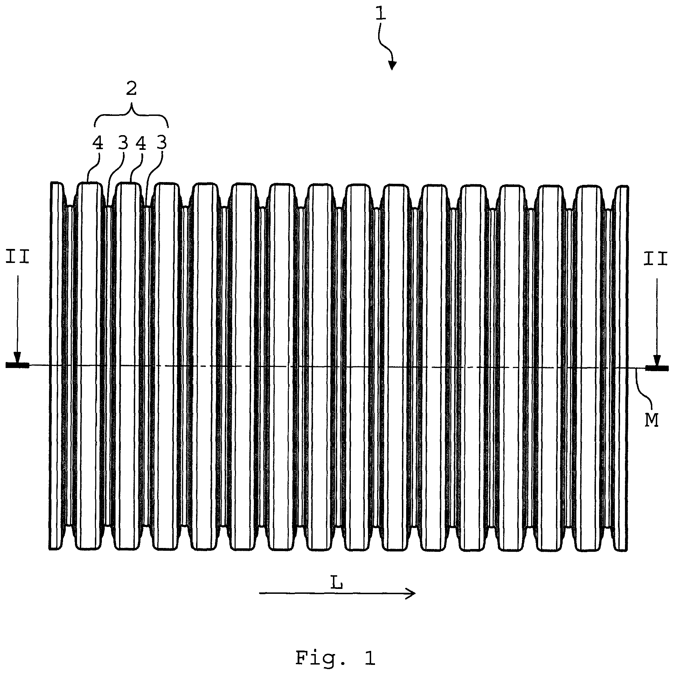

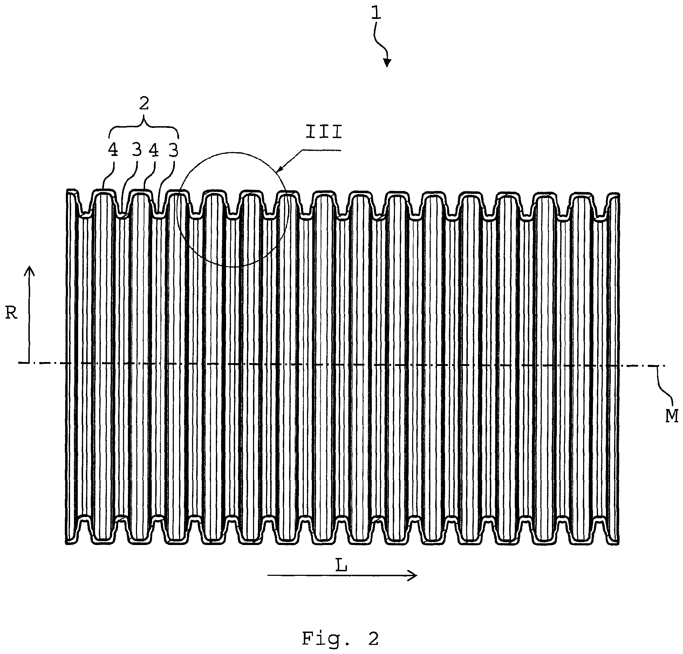

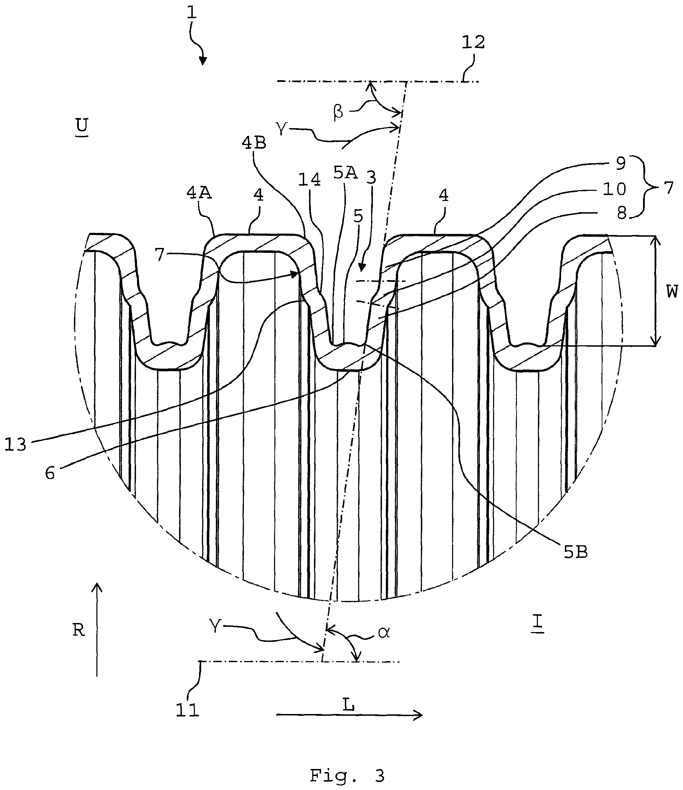

Die Fig. 1 zeigt eine schematische Seitenansicht einer Ausführungsform eines Wellschlauchs 1. Die Fig. 2 zeigt eine schematische Schnittansicht des Wellschlauchs 1 gemäß der Schnittlinie II-II der Fig. 1, und die Fig. 3 zeigt die Detailansicht III gemäß der Fig. 2. Im Folgenden wird auf die Fig. 1 bis 3 gleichzeitig Bezug genommen.

Der Wellschlauch 1 ist insbesondere geeignet, einen Kabelbaum zu bilden. Das heißt, der Wellschlauch 1 kann Teil eines Kabelbaums sein. Hierzu wird eine Vielzahl an nicht gezeigten Kabeln in dem Wellschlauch 1 aufgenommen. Die Kabel können auch als Leitungen bezeichnet werden. Die Anzahl der Kabel ist beliebig. Die Kabel können identische oder unterschiedliche Durchmesser und/oder Querschnitte aufweisen. Zum Bilden des Kabelbaums werden die Kabel in den Wellschlauch 1 eingeschoben oder in diesen eingezogen. Der Wellschlauch 1 findet bevorzugt im Bereich der Kraftfahrzeugtechnik Anwendung. Der Wellschlauch 1 kann allerdings auch in jedem anderen Bereich eingesetzt werden. Der Wellschlauch 1 kann auch selbst Fluidträger sein. Beispielsweise kann der Wellschlauch 1 ein Wischwasserschlauch sein.

Die Kabel können elektrische Kabel, beispielsweise einphasige Kabel, mehrphasige Kabel, Koaxialkabel oder dergleichen, oder Fluidleitungen, wie beispielsweise Benzin-, Diesel-, Kerosin-, Hydraulik- oder Pneumatikleitungen, sein. Der Wellschlauch 1 ist bevorzugt aus einem Kunststoffmaterial gefertigt. Beispielsweise kann der Wellschlauch 1 aus Polyamid (PA), Polyethylen (PE), Polypropylen (PP), Polytetrafluorethylen (PTFE), Polyvinylchlorid (PVC) oder dergleichen gefertigt sein. Der Wellschlauch 1 wird vorzugsweise mit Hilfe eines Extrusionsverfahrens hergestellt.

Der Wellschlauch 1 ist rotationssymmetrisch um eine Mittel- oder Symmetrieachse M aufgebaut. Der Wellschlauch 1 weist eine Längsrichtung L auf, die parallel zu der Symmetrieachse M angeordnet ist oder mit dieser übereinstimmt. Die Längsrichtung L kann in der Orientierung der Fig. 1 bis 3 von links nach rechts oder umgekehrt orientiert sein. Der Wellschlauch 1 umfasst auch eine radiale Richtung oder Radialrichtung R, die senkrecht zu der Symmetrieachse M beziehungsweise senkrecht zu der Längsrichtung L orientiert ist. Die Radialrichtung R weist dabei von der Symmetrieachse M weg.

Der Wellschlauch 1 umfasst eine Wellung 2. Die Wellung 2 weist eine Vielzahl an Wellentälern 3 und Wellenbergen 4 auf, die in der Längsrichtung L betrachtet abwechselnd angeordnet sind. Das heißt, zwischen zwei Wellentälern 3 ist ein Wellenberg 4 und umgekehrt angeordnet. Die Anzahl der Wellentäler 3 und der Wellenberge 4 ist beliebig. Insbesondere ist der Wellschlauch 1 ein Endlosprodukt. In den Fig. 1 und 2 sind lediglich jeweils zwei Wellentäler 3 und zwei Wellenberge 4 mit einem Bezugszeichen versehen. Die Wellung 2 ist, wie in der Fig. 3 gezeigt, sowohl einem Innenraum I des Wellschlauchs 1 zugewandt als auch dem Innenraum I abgewandt ausgebildet. Das heißt, die Wellentäler 3 und die Wellenberge 4 sind sowohl dem Innenraum I zugewandt als auch diesem abgewandt ausgebildet. Dabei sind jedoch von dem Innenraum I aus betrachtet die Wellentäler 3 als Wellenberge und die Wellenberge 4 als Wellentäler ausgebildet. Nachfolgend wird jedoch davon ausgegangen, dass die Wellung 2 von einer dem Innenraum I abgewandten Umgebung U des Wellschlauchs 1 aus betrachtet wird.

Wie die Fig. 3 zeigt, weist jedes Wellental 3 eine dem Innenraum I abgewandte, das heißt, der Umgebung U zugewandte, optionale Vorwölbung 5 auf. Die Vorwölbung 5 ist als ringförmig um die Symmetrieachse M umlaufende Rippe ausgebildet. Die Wellentäler 3 können auch glatt sein. Die Vorwölbung 5 ist im Querschnitt insbesondere konvex ausgebildet. Dabei ist die Vorwölbung 5 bogenförmig, insbesondere kreisbogenförmig, gekrümmt. Dem Innenraum I zugewandt weist jedes Wellental 3 eine kreiszylinderförmig um die Symmetrieachse M umlaufende Innenfläche 6 auf. Die Vorwölbung 5 dient als Materialansammlung in dem jeweiligen Wellental 3 und sorgt dafür, dass die Innenfläche 6 in der Längsrichtung L gesehen flach oder eben ist. Hierdurch kann ein Scheuern der innen liegenden Kabel an der Innenfläche 6 bei Vibrationen verhindert werden, da die Innenfläche 6 keine Unebenheiten oder Einsenkungen aufweist, an denen die Kabel beschädigt werden könnten.

Alternativ kann die Innenfläche 6, wie die Vorwölbung 5, bogenförmig, insbesondere kreisbogenförmig, gekrümmt sein. Die Innenfläche 6 ist dann als innenseitig um das jeweilige Wellental 3 umlaufende Vertiefung oder Nut ausgebildet. Hierdurch kann in den Wellentälern 3 eine konstante Wanddicke erzielt werden.

Die Wellentäler 3 und die Wellenberge 4 sind mit Hilfe von Wellenflanken 7 miteinander verbunden, um die Wellung 2 auszubilden. Jedem Wellenberg 4 sind dabei eine erste Verrundung 4A und eine zweite Verrundung 4B zugeordnet. Die Verrundungen 4A, 4B sind in der Längsrichtung L betrachtet voneinander beabstandet positioniert. Die Verrundungen 4A, 4B können als Biegebereiche oder Biegestellen bezeichnet werden. Bei einem Biegen des Wellschlauchs 1 fungieren die Verrundungen 4A, 4B als Biegebereiche oder Biegestellen, so dass sich nur die Verrundungen 4A, 4B, die einen Übergang zwischen dem Wellenberg 4 und den Wellenflanken 7 bilden, verformen und der Wellenberg 4 selbst insbesondere unverformt bleibt. Jeder Wellenberg 4 geht somit über die diesem zugeordneten Verrundungen 4A, 4B in zwei Wellenflanken 7 über.

Die Wellenflanken 7 verlaufen dabei schräg zu der Längsrichtung L und in der Radialrichtung R betrachtet von den Wellentälern 3 radial nach außen in Richtung der Wellenberge 4. Jedem Wellental 3 beziehungsweise jedem Wellenberg 4 sind dabei zwei gegensätzlich geneigte Wellenflanken 7 zugeordnet. Die zuvor erläuterte Vorwölbung 5 geht mit Hilfe beidseits der Vorwölbung 5 angeordneter Verrundungen 5A, 5B in die jeweilige Wellenflanke 7 über. Hierdurch weisen die Wellentäler 3 jeweils eine wellige Geometrie auf und können daher auch als wellige Wellentäler 3 bezeichnet werden. Die Verrundungen 5A, 5B sind bogenförmig, insbesondere kreisbogenförmig, gekrümmt. Bei einem Biegen des Wellschlauchs 1 fungieren die Verrundungen 5A, 5B als Biegebereiche oder Biegestellen, so dass sich nur die Verrundungen 5A, 5B, die einen Übergang zwischen dem Wellental 3 und den Wellenflanken 7 bilden, verformen und die Vorwölbung 5 selbst unverformt bleibt. Die Verrundungen 5A, 5B sind Biegebereiche oder Biegestellen oder können als solche bezeichnet werden.

Wie zuvor erwähnt, ist die Vorwölbung 5 jedoch optional. Für den Fall, dass keine Vorwölbung 5 vorgesehen ist, sind die Wellentäler 3 glatt und insbesondere zylinderförmig. In diesem Fall bilden die Verrundungen 5A, 5B jeweils einen Übergang von dem Wellental 3 in die Wellenflanken 7. Bei einem Biegen des Wellschlauchs 1 fungieren die Verrundungen 5A, 5B als Biegebereiche oder Biegestellen, so dass sich nur die Verrundungen 5A, 5B, die einen Übergang zwischen dem Wellental 3 und den Wellenflanken 7 bilden, verformen und das Wellental 3 selbst insbesondere unverformt bleibt.

Jede Wellenflanke 7 weist einen ringförmig um die Symmetrieachse M umlaufenden ersten Wellenflankenabschnitt 8 sowie einen ebenfalls ringförmig um die Symmetrieachse M umlaufenden zweiten Wellenflankenabschnitt 9 auf. Dabei ist der erste Wellenflankenabschnitt 8 in der Radialrichtung R betrachtet innerhalb des zweiten Wellenflankenabschnitts 9 angeordnet. Die Wellung 2 weist eine Wellenhöhe W auf. Die Wellenhöhe W ist definiert als der Abstand eines Wellentals 3 zu einem Wellenberg 4 in der Radialrichtung R betrachtet.

Zwischen dem ersten Wellenflankenabschnitt 8 und dem zweiten Wellenflankenabschnitt 9 ist ein Biegeabschnitt 10 vorgesehen, der dazu eingerichtet ist, sich bei einem Biegen des Wellschlauchs 1 derart elastisch zu verformen, dass der erste Wellenflankenabschnitt 8 relativ zu dem zweiten Wellenflankenabschnitt 9 verschwenkt. Das heißt, der Biegeabschnitt 10 wirkt als zwischen dem ersten Wellenflankenabschnitt 8 und dem zweiten Wellenflankenabschnitt 9 vorgesehenes Scharnier. Der jeweilige Biegeabschnitt 10 bildet dabei eine Schnittstelle zwischen dem ersten Wellenflankenabschnitt 8 und dem zweiten Wellenflankenabschnitt 9. Der Biegeabschnitt 10 kann dabei jeweils Teil des ersten Wellenflankenabschnitts 8 und/oder des zweiten Wellenflankenabschnitts 9 sein. In der Längsrichtung L betrachtet sind der erste Wellenflankenabschnitt 8 und der zweite Wellenflankenabschnitt 9 axial zueinander versetzt angeordnet. Das heißt, der Biegeabschnitt 10 bildet einen Knick zwischen dem ersten Wellenflankenabschnitt 8 und dem zweiten Wellenflankenabschnitt 9. Der Biegeabschnitt 10 kann als Biegestelle bezeichnet werden.

Der erste Wellenflankenabschnitt 8 ist in einem ersten Neigungswinkel a relativ zu der Längsrichtung L beziehungsweise zu der Symmetrieachse M geneigt. Der zweite Wellenflankenabschnitt 9 ist in einem zweiten Neigungswinkel β relativ zu der Längsrichtung L beziehungsweise zu der Symmetrieachse M geneigt. In der Fig. 3 sind zur Bemaßung der Neigungswinkel a, β zwei Hilfsgeraden 11, 12 gezeigt, die parallel zu der Längsrichtung L beziehungsweise zu der Symmetrieachse M angeordnet sind.

Der erste Neigungswinkel a und der zweite Neigungswinkel β können gleich groß sein, so dass der erste Wellenflankenabschnitt 8 und der zweite Wellenflankenabschnitt 9 in der gleichen Neigung relativ zu der Längsrichtung L beziehungsweise zu der Symmetrieachse M geneigt sind. Alternativ können der erste Neigungswinkel a und der zweite Neigungswinkel β unterschiedlich groß sein, so dass der erste Wellenflankenabschnitt 8 und der zweite Wellenflankenabschnitt 9 unterschiedlich stark relativ zu der Längsrichtung L beziehungsweise zu der Symmetrieachse M geneigt sind. Der erste Wellenflankenabschnitt 8 kann dann in einem dritten Neigungswinkel γ relativ zu dem zweiten Wellenflankenabschnitt 9 geneigt sein. Der dritte Neigungswinkel γ ist dann ungleich 180°, insbesondere kleiner als 180°.

Der Biegeabschnitt 10 weist eine erste Verrundung 13 und eine zweite Verrundung 14 auf. Die erste Verrundung 13 ist dem Innenraum I des Wellschlauchs 1 zugewandt. Dabei geht der erste Wellenflankenabschnitt 8 mit Hilfe der ersten Verrundung 13 in den zweiten Wellenflankenabschnitt 9 über. Die erste Verrundung 13 ist bogenförmig, insbesondere kreisbogenförmig, gekrümmt. Dabei ist die erste Verrundung 13 tangential zu dem zweiten Wellenflankenabschnitt 9 angeordnet.

Die zweite Verrundung 14 ist dem Innenraum I abgewandt und der Umgebung U zugewandt. Dabei geht der erste Wellenflankenabschnitt 8 dem Innenraum I abgewandt mit Hilfe der zweiten Verrundung 14 in den zweiten Wellenflankenabschnitt 9 über. Auch die zweite Verrundung 14 ist bogenförmig, insbesondere kreisbogenförmig, gekrümmt. Die zweite Verrundung 14 ist dabei tangential zu dem ersten Wellenflankenabschnitt 8 und dem zweiten Wellenflankenabschnitt 9 angeordnet. Die zweite Verrundung 14 umfasst hierzu zwei Bögen, insbesondere zwei Kreisbögen, von denen je einer tangential zu dem entsprechenden Wellenflankenabschnitt 8, 9 positioniert ist. Die beiden Bögen wiederum sind tangential zueinander positioniert. Somit kann der Biegeabschnitt 10 im Querschnitt eine S-förmige Geometrie aufweisen.

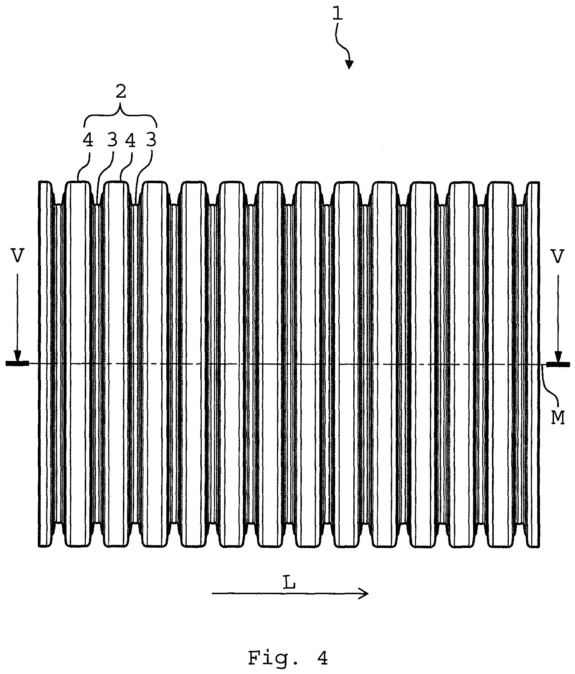

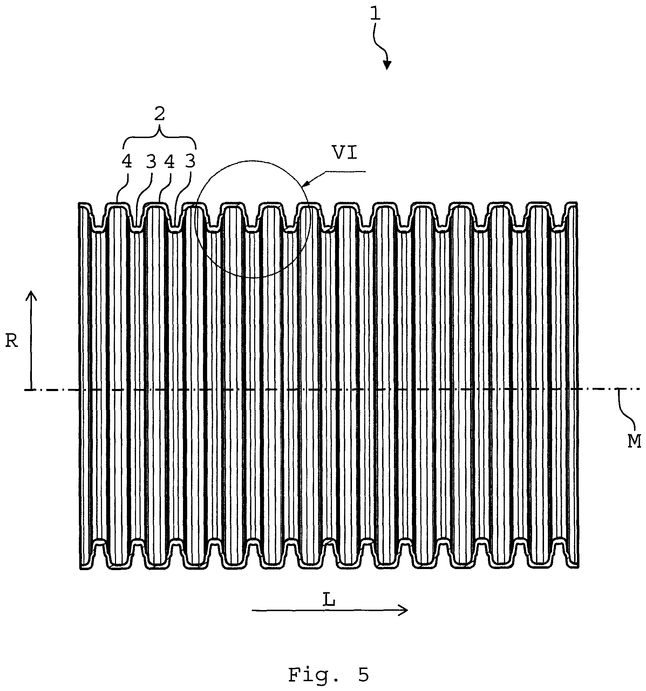

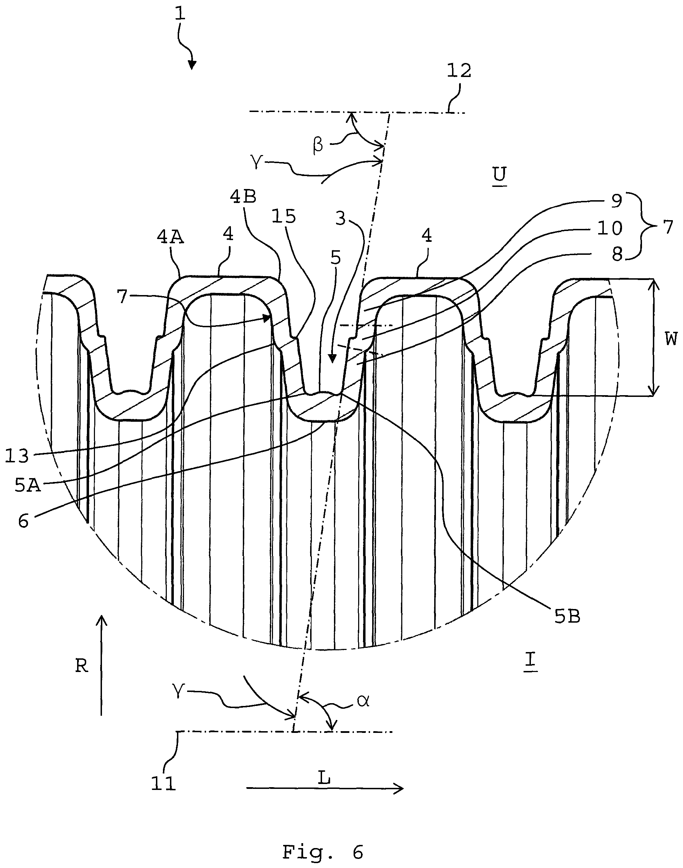

Die Fig. 4 zeigt eine schematische Seitenansicht einer weiteren Ausführungsform eines Wellschlauchs 1. Die Fig. 5 zeigt eine schematische Schnittansicht des Wellschlauchs 1 gemäß der Schnittlinie V-V der Fig. 4, und die Fig. 6 zeigt die Detailansicht VI gemäß der Fig. 5. Im Folgenden wird auf die Fig. 4 bis 6 gleichzeitig Bezug genommen.

Der Wellschlauch 1 gemäß den Fig. 4 bis 6 unterscheidet sich von dem Wellschlauch 1 gemäß den Fig. 1 bis 3 nur dadurch, dass der Biegeabschnitt 10 dem Innenraum I abgewandt, das heißt, der Umgebung U zugewandt, keine zweite Verrundung 14, sondern eine parallel zu der Längsrichtung L beziehungsweise der Symmetrieachse M verlaufende Gerade 15 aufweist. Mit Hilfe der Geraden 15 geht der erste Wellenflankenabschnitt 8 dem Innenraum I abgewandt, das heißt, der Umgebung U zugewandt, in den zweiten Wellenflankenabschnitt 9 über.

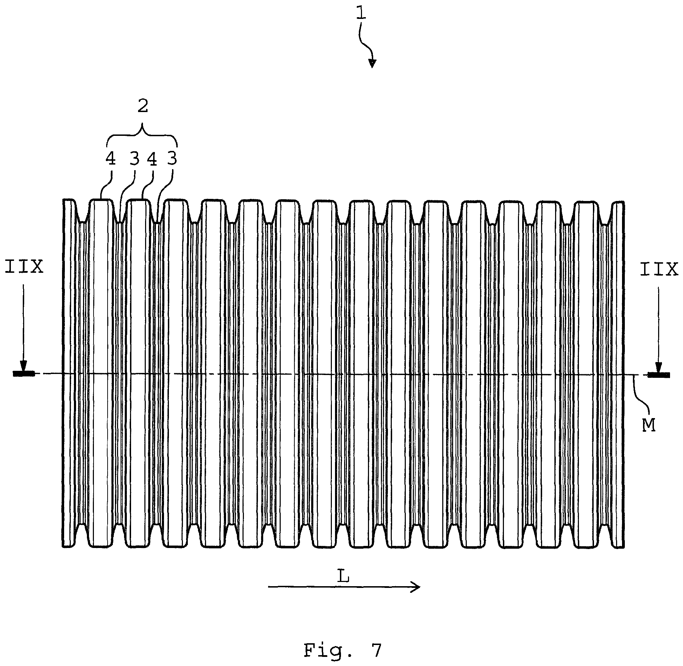

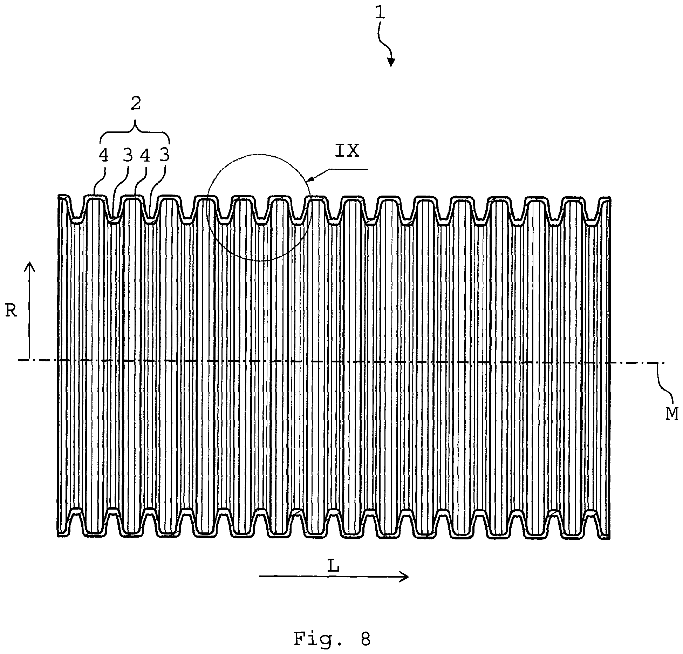

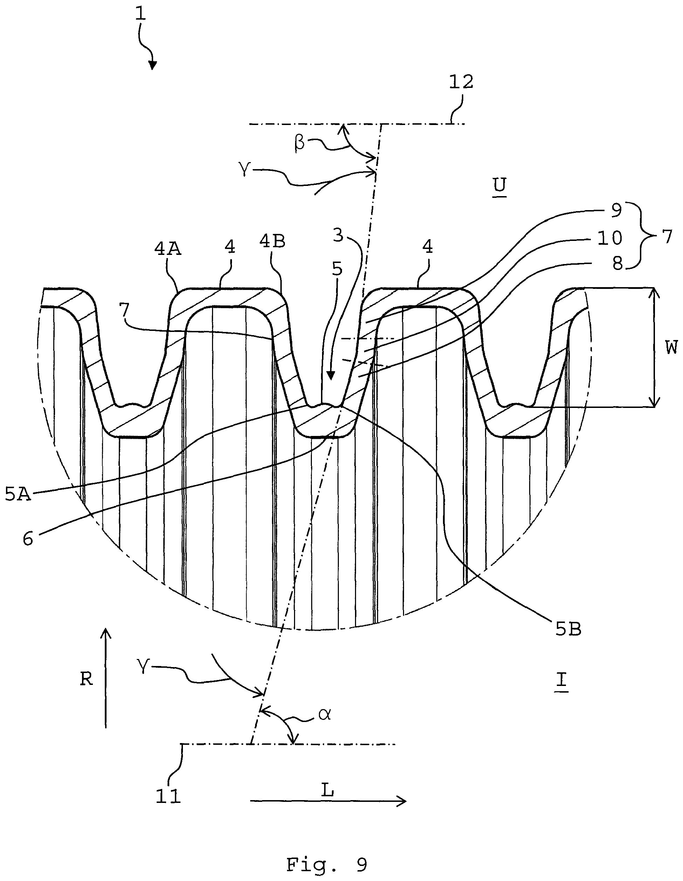

Die Fig. 7 zeigt eine schematische Seitenansicht einer weiteren Ausführungsform eines Wellschlauchs 1. Die Fig. 8 zeigt eine schematische Schnittansicht des Wellschlauchs 1 gemäß der Schnittlinie IIX-IIX der Fig. 7, und die Fig. 9 zeigt die Detailansicht IX gemäß der Fig. 8. Im Folgenden wird auf die Fig. 7 bis 9 gleichzeitig Bezug genommen.

Die Ausführungsform des Wellschlauchs 1 gemäß den Fig. 7 bis 9 unterscheidet sich von der Ausführungsform des Wellschlauchs 1 gemäß den Fig. 1 bis 3 dadurch, dass der Biegeabschnitt 10 weder eine wie zuvor erläuterte dem Innenraum I zugewandte erste Verrundung 13 noch eine dem Innenraum I abgewandte zweite Verrundung 14 aufweist. Bei dieser Ausführungsform des Wellschlauchs 1 gemäß den Fig. 7 bis 9 sind der erste Wellenflankenabschnitt 8 und der zweite Wellenflankenabschnitt 9 in der Längsrichtung L betrachtet nicht zueinander versetzt. Das heißt, der Biegeabschnitt 10 ist als den ersten Wellenflankenabschnitt 8 und den zweiten Wellenflankenabschnitt 9 verbindender Knick ausgebildet. Der erste Wellenflankenabschnitt 8 ist in dem dritten Neigungswinkel γ relativ zu dem zweiten Wellenflankenabschnitt 9 geneigt.

Die Funktionalität des Wellschlauchs 1 gemäß allen zuvor erläuterten Ausführungsformen wird nachfolgend erläutert. Durch das Vorsehen des Biegeabschnitts 10 können jedem Wellental 3 beziehungsweise jedem Wellenberg 4 zwei zusätzliche Biegepunkte oder Biegebereiche zugeordnet werden. Die Biegeabschnitte 10 wirken dabei als zusätzliche Biegebereiche, die zusätzlich zu einem jeweiligen Übergang der Wellenflanken 7 in das jeweilige Wellental 3, insbesondere den Verrundungen 5A, 5B, beziehungsweise in den jeweiligen Wellenberg 4 ein Biegen des Wellschlauchs 1 ermöglichen. Hierdurch kann die Flexibilität des Wellschlauchs 1 signifikant erhöht werden. Die Vorwölbung 5 in den Wellentälern 3 ermöglicht eine glatte Innenfläche 6, wodurch eine Beschädigung von in dem Wellschlauch 1 aufgenommenen Kabeln verhindert werden kann.

Die Kraftübertragung des Wellschlauchs 1 im Vergleich zu Wellschläuchen ohne zusätzliche Biegeabschnitte 10 kann verbessert werden. Die Wellenhöhe W der Wellung 2 kann im Vergleich zu bekannten Wellschläuchen bei gleicher Flexibilität des Wellschlauchs 1 reduziert werden. Hierdurch ergibt sich eine Materialeinsparung bei der Herstellung des Wellschlauchs 1. Bei gleicher Wellenhöhe W kann somit eine höhere Flexibilität und eine höhere Formstabilität im Vergleich zu bekannten Wellschläuchen erzielt werden.

Obwohl die vorliegende Erfindung anhand von Ausführungsbeispielen beschrieben wurde, ist sie vielfältig modifizierbar.

### BEZUGSZEICHENLISTE

- 1: Wellschlauch
- 2: Wellung
- 3: Wellental
- 4: Wellenberg
- 4A: Verrundung
- 4B: Verrundung
- 5: Vorwölbung
- 5A: Verrundung
- 5B: Verrundung
- 6: Innenfläche
- 7: Wellenflanke
- 8: Wellenflankenabschnitt
- 9: Wellenflankenabschnitt
- 10: Biegeabschnitt
- 11: Hilfsgerade
- 12: Hilfsgerade
- 13: Verrundung
- 14: Verrundung
- 15: Gerade

- I: Innenraum
- L: Längsrichtung
- M: Symmetrieachse
- R: Radialrichtung
- U: Umgebung
- W: Wellenhöhe
- a: Neigungswinkel
- β: Neigungswinkel
- γ: Neigungswinkel

## Patentansprüche

1. Wellschlauch (1) mit:
einer Vielzahl an Wellentälern (3) und Wellenbergen (4), die in einer Längsrichtung (L) des Wellschlauchs (1) abwechselnd angeordnet sind, und
einer Vielzahl an Wellenflanken (7), welche die Wellentäler (3) und die Wellenberge (4) miteinander verbinden,
wobei jede Wellenflanke (7) einen ersten Wellenflankenabschnitt (8), einen zweiten Wellenflankenabschnitt (9) und einen zwischen dem ersten Wellenflankenabschnitt (8) und dem zweiten Wellenflankenabschnitt (9) angeordneten Biegeabschnitt (10) umfasst,
wobei sich der Biegeabschnitt (10) bei einem Biegen des Wellschlauchs (1) derart elastisch verformt, dass der erste Wellenflankenabschnitt (8) relativ zu dem zweiten Wellenflankenabschnitt (9) verschwenkt,
wobei der Biegeabschnitt (10) ein Scharnier bildet, um das der erste Wellenflankenabschnitt (8) relativ zu dem zweiten Wellenflankenabschnitt (9) oder umgekehrt verschwenken kann, und
wobei jedes Wellental (3) mit Hilfe eines ersten Biegebereichs (5A) und eines von dem ersten Biegebereich (5A) in der Längsrichtung (L) beabstandet positionierten zweiten Biegebereichs (5B) in zwei beidseits des Wellentals (3) angeordnete Wellenflanken (7) übergeht.

2. Wellschlauch nach Anspruch 1, wobei der erste Wellenflankenabschnitt (8) und der zweite Wellenflankenabschnitt (9) in der Längsrichtung (L) zueinander versetzt angeordnet sind.

3. Wellschlauch nach Anspruch 1 oder 2, wobei der erste Wellenflankenabschnitt (8) in einem ersten Neigungswinkel (a) relativ zu der Längsrichtung (L) geneigt ist, und wobei der zweite Wellenflankenabschnitt (9) in einem zweiten Neigungswinkel (β) relativ zu der Längsrichtung (L) geneigt ist.

4. Wellschlauch nach Anspruch 3, wobei der erste Neigungswinkel (a) und der zweite Neigungswinkel (β) unterschiedlich groß oder gleich groß sind.

5. Wellschlauch nach einem der Ansprüche 1 - 4, wobei der erste Wellenflankenabschnitt (8) einem Innenraum (I) des Wellschlauchs (1) zugewandt mit Hilfe einer bogenförmig gekrümmten ersten Verrundung (13) in den zweiten Wellenflankenabschnitt (9) übergeht.

6. Wellschlauch nach Anspruch 5, wobei die erste Verrundung (13) tangential zu dem ersten Wellenflankenabschnitt (8) und/oder dem zweiten Wellenflankenabschnitt (9) angeordnet ist.

7. Wellschlauch nach Anspruch 5 oder 6, wobei der erste Wellenflankenabschnitt (8) dem Innenraum (I) abgewandt mit Hilfe einer bogenförmig gekrümmten zweiten Verrundung (14) in den zweiten Wellenflankenabschnitt (9) übergeht.

8. Wellschlauch nach Anspruch 7, wobei die zweite Verrundung (14) tangential zu dem ersten Wellenflankenabschnitt (8) und/oder dem zweiten Wellenflankenabschnitt (9) angeordnet ist.

9. Wellschlauch nach einem der Ansprüche 5 - 8, wobei der Biegeabschnitt (10) die erste Verrundung (13) und die zweite Verrundung (14) aufweist.

10. Wellschlauch nach Anspruch 5 oder 6, wobei der erste Wellenflankenabschnitt (8) dem Innenraum (I) abgewandt mit Hilfe einer Geraden (15) in den zweiten Wellenflankenabschnitt (9) übergeht.

11. Wellschlauch nach Anspruch 10, wobei der Biegeabschnitt (10) die erste Verrundung (13) und die Gerade (15) aufweist.

12. Wellschlauch nach einem der Ansprüche 1 - 11, wobei der erste Wellenflankenabschnitt (8) innerhalb des zweiten Wellenflankenabschnitts (9) angeordnet ist.

13. Wellschlauch nach einem der Ansprüche 1 - 12, wobei jedes Wellental (3) eine einem Innenraum (I) des Wellschlauchs (1) abgewandte Vorwölbung (5) aufweist.

14. Wellschlauch nach Anspruch 13, wobei die Vorwölbung (5) bogenförmig gekrümmt ist.

15. Wellschlauch nach Anspruch 13 oder 14, wobei jedes Wellental (3) dem Innenraum (I) zugewandt glatt ist.

## Claims

1. Corrugated tube (1) comprising:
a plurality of wave valleys (3) and wave crests (4), which are alternately arranged in a longitudinal direction (L) of the corrugated tube (1), and
comprises a plurality of wave flanks (7), which connect the wave valleys (3) and the wave crests (4) to each other, wherein each wave flank (7) comprises a first wave flank section (8), a second wave flank section (9), and a bending section (10) arranged between the first wave flank section (8) and the second wave flank section (9), and wherein the bending section (10) is elastically deformed during bending of the corrugated tube (1) such that the first wave flank section (8) is swiveled in relation to the second wave flank section (9),
wherein the bending section (10) forms a hinge about which the first wave flank section (8) can swivel in relation to the second wave flank section (9) or vice versa, and
wherein each wave valley (3) transitions into two wave flanks (7) disposed on either side of the wave valley (3) by means of a first bending region (5A) and a second bending region (5B) positioned at a distance from the first bending region (5A) in the longitudinal direction (L).

2. Corrugated tube according to claim 1, wherein the first wave flank section (8) and the second wave flank section (9) are arranged at an offset to each other in the longitudinal direction (L).

3. Corrugated tube according to claim 1 or 2, wherein the first wave flank section (8) is inclined at a first inclination angle (a) in relation to the longitudinal direction (L) and wherein the second wave flank section (9) is inclined at a second inclination angle (β) in relation to the longitudinal direction (L).

4. Corrugated tube according to claim 3, wherein the first inclination angle (a) and the second inclination angle (β) are of different sizes or of the same size.

5. Corrugated tube according to one of claims 1 to 4, wherein on the side facing an internal space (I) of the corrugated tube (1), the first wave flank section (8) transitions into the second wave flank section (9) by means of an arcuate first rounding (13).

6. Corrugated tube according to claim 5, wherein the first rounding (13) is arranged tangentially to the first wave flank section (8) and/or to the second wave flank section (9).

7. Corrugated tube according to claim 5 or 6, wherein on the side facing away from the internal space (I), the first wave flank section (8) transitions into the second wave flank section (9) by means of an arcuate second rounding (14).

8. Corrugated tube according to claim 7, wherein the second rounding (14) is arranged tangentially to the first wave flank section (8) and/or to the second wave flank section (9).

9. Corrugated tube according to one of claims 5 to 8, wherein the bending section (10) has the first rounding (13) and the second rounding (14).

10. Corrugated tube according to claim 5 or 6, wherein on the side facing away from the internal space (I), the first wave flank section (8) transitions into the second wave flank section (9) by means of a straight line (15).

11. Corrugated tube according to claim 10, wherein the bending section (10) has the first rounding (13) and the straight line (15).

12. Corrugated tube according to one of claims 1 to 11, wherein the first wave flank section (8) is arranged within the second wave flank section (9).

13. Corrugated tube according to one of claims 1 to 12, wherein each wave valley (3) has a protrusion (5) facing away from the internal space (I) of the corrugated tube (1).

14. Corrugated tube according to claim 13, wherein the protrusion (5) is curved in the shape of an arc.

15. Corrugated tube according to claim 13 or 14, wherein each wave valley (3) is smooth on the side facing the internal space (I).

## Revendications

1. Tuyau annelé (1) comportant :
une pluralité de creux d'annelures (3) et de crêtes d'annelures (4) qui sont disposés en alternance dans une direction longitudinale (L) du tuyau annelé (1), et
une pluralité de flancs d'annelures (7) qui relient les creux d'annelure (3) et les crêtes d'annelure (4) les uns aux autres,
chaque flanc d'annelure (7) ayant une première section de flanc d'annelure (8), une deuxième section de flanc d'annelure (9) et une section de cintrage (10) disposée entre la première section de flanc d'annelure (8) et la deuxième section de flanc d'annelure (9),
la section de cintrage (10) se déformant élastiquement, lorsque le tuyau annelé (1) est cintré, de telle sorte que la première section de flanc d'annelure (8) pivote par rapport à la deuxième section de flanc d'annelure (9),
la section de cintrage (10) formant une charnière autour de laquelle la première section de flanc d'annelure (8) peut pivoter par rapport à la deuxième section de flanc d'annelure (9), ou inversement, et
chaque creux d'annelure (3) faisant saillie, à l'aide d'une première zone de cintrage (5A) et d'une deuxième zone de cintrage (5B) positionnée à distance de la première zone de cintrage (5A) dans la direction longitudinale (L), dans deux flancs d'annelure (7) disposés de chaque côté du creux d'annelure (3).

2. Tuyau annelé selon la revendication 1, dans lequel la première section de flanc d'annelure (8) et la deuxième section de flanc d'annelure (9) sont disposées de manière décalée l'une par rapport à l'autre dans la direction longitudinale (L).

3. Tuyau annelé selon la revendication 1 ou 2, dans lequel la première section de flanc d'annelure (8) est inclinée d'un premier angle d'inclinaison (α) par rapport à la direction longitudinale (L) et dans lequel la deuxième section de flanc d'annelure (9) est inclinée d'un deuxième angle d'inclinaison (β) par rapport à la direction longitudinale (L).

4. Tuyau annelé selon la revendication 3, dans lequel le premier angle d'inclinaison (α) et le deuxième angle d'inclinaison (β) sont différents ou égaux.

5. Tuyau annelé selon l'une des revendications 1 à 4, dans lequel la première section de flanc d'annelure (8) fait saillie du côté de l'espace intérieur (I) du tuyau annelé (1) dans la deuxième section de flanc d'annelure (9) à l'aide d'un premier arrondi incurvé en forme d'arc (13).

6. Tuyau annelé selon la revendication 5, dans lequel le premier arrondi (13) est disposé de manière tangentielle à la première section de flanc d'annelure (8) et/ou à la deuxième section de flanc d'annelure (9).

7. Tuyau annelé selon la revendication 5 ou 6, dans lequel la première section de flanc d'annelure (8) fait saillie du côté opposé à l'espace intérieur (I) dans la deuxième section de flanc d'annelure (9) à l'aide d'un deuxième arrondi incurvé en forme d'arc (14).

8. Tuyau annelé selon la revendication 7, dans lequel le deuxième arrondi (14) est disposé tangentiellement à la première section de flanc d'annelure (8) et/ou à la deuxième section de flanc d'annelure (9).

9. Tuyau annelé selon l'une des revendications 5 à 8, dans lequel la section de cintrage (10) présente le premier arrondi (13) et le deuxième arrondi (14).

10. Tuyau annelé selon la revendication 5 ou 6, dans lequel la première section de flanc d'annelure (8) fait saillie du côté opposé à l'espace intérieur (I) dans la deuxième section de flanc d'annelure à l'aide d'une ligne droite (15).

11. Tuyau annelé selon la revendication 10, dans lequel la section de cintrage (10) présente l'arrondi (13) et la ligne droite (15).

12. Tuyau annelé selon l'une des revendications 1 à 11, dans lequel la première section de flanc d'annelure (8) est disposée à l'intérieur de la deuxième section de flanc d'annelure (9).

13. Tuyau annelé selon l'une des revendications 1 à 12, dans lequel chaque creux d'annelure (3) présente une protubérance (5) du côté opposé à l'espace intérieur (I) du tuyau annelé (1).

14. Tuyau annelé selon la revendication 13, dans lequel la protubérance (5) est incurvé en forme d'arc.

15. Tuyau annelé selon la revendication 13 ou 14, dans lequel chaque creux d'annelure (3) est lisse du côté de l'espace intérieur (I).
